# EUROPÄISCHE PATENTSCHRIFT

(11) **EP 2 387 675 B1**
(45) Veröffentlichungstag und Bekanntmachung des Hinweises auf die Patenterteilung: **07.08.2013**
(21) Anmeldenummer: 10700944.1
(22) Anmeldetag: 12.01.2010
(51) Int. Cl.: F16H 57/02, H02K 5/04

(54) **GETRIEBEGEHÄUSE**
TRANSMISSION HOUSING
CARTER D'ENGRENAGE

(30) Priorität: 13.01.2009 DE 102009004779; 18.12.2009 WO PCT/EP2009/009135
(43) Veröffentlichungstag der Anmeldung: 23.11.2011
(73) Patentinhaber: SEW-EURODRIVE GmbH & Co. KG, 76646 Bruchsal (DE)
(72) Erfinder: LEIBOLD, Hubert, 76694 Forst (DE); DENEFLEH, Roland, 64683 Einhausen (DE); SIGMUND, Andreas, 76646 Bruchsal (DE); GANTNER, Martin, 68753 Waghäusel-Kirrlach (DE); SANDER, Joachim, 76698 Ubstadt-Weiher (DE)
(74) Vertreter: Tüngler, Eberhard
(86) Internationale Anmeldenummer: PCT/EP2010/000104
(87) Internationale Veröffentlichungsnummer: WO 2010/081671

(56) Entgegenhaltungen:
- EP-A- 0 177 001
- DE-A1-102005 031 197
- US-A1- 2006 156 861

## Beschreibung

Die Erfindung betrifft ein Getriebegehäuse für ein Kegelradgetriebe.

Die DE 201 06 655 U1 offenbart einen Reinraum-Getriebemotor mit einem Motorabschnitt und einem Getriebeabschnitt, die miteinander verbunden sind und eine Baueinheit bilden, wobei die Baueinheit eine glatte Oberfläche aufweist.

**Aus der gattungsgemäßen** US 2006/0156861 A1 **Ist ein Getriebegehäuse bekannt.**

Der Erfindung liegt die Aufgabe zugrunde, ein Getriebegehäuse weiterzubilden.

Erfindungsgemäß wird die Aufgabe bei dem Getriebegehäuse nach den in Anspruch 1 angegebenen Merkmalen und bei dem Verfahren mit den Merkmalen des Anspruchs 12 gelöst.

Wichtige Merkmale der Erfindung bei dem Getriebegehäuse für ein Kegelradgetriebe sind, dass das Getriebegehäuse für ein Kegelradgetriebe eine Oberfläche aufweist, welche derart aus Abschnitten und Anbauflächen besteht, dass jeder Abschnitt an mindestens zwei Anbauflächen angrenzt und jeder Abschnitt entlang zumindest einer Oberflächenkurve durchgehend konvex gekrümmt ist, wobei die Oberflächenkurve das Schnittgebilde einer zu einem Punkt des Abschnitts gehörigen gedachten Normalenebene mit dem jeweiligen Abschnitt ist.

Oder mit anderen Worten, dass das Getriebegehäuse für ein Kegelradgetriebe eine Oberfläche aufweist, welche aus Abschnitten und Anbauflächen besteht, das heißt insbesondere nur Abschnitte und Anbauflächen aufweist, wobei die Abschnitte in zumindest einer Richtung konvex gekrümmt sind. Die Oberflächenkurve läuft entlang einer Richtung. Die Normalenebene steht senkrecht auf einem Tangentenvektor eines Punkles auf der Oberfläche beziehungsweise des Abschnitts.

Von Vorteil ist dabei, dass Flüssigkeiten an der Oberfläche des Getriebegehäuses gut ablaufen und Verunreinigungen leicht entfernbar sind, ohne dass Abflusskanäle vorgesehen werden müssen.

Bei einer weiteren Ausführungsform weisen die Abschnitte einen Krümmungsradius von größer als ca. 3 mm insbesondere von größer als ca. 6 mm auf. Von Vorteil ist dabei, dass Flüssigkeiten an der Oberfläche des Getriebegehäuses gut ablaufen und Verunreinigungen leicht entfernbar sind, ohne dass Abflusskanäle vorgesehen werden müssen. Zudem erleichtern diese Krümmungen ein Entformen beim Herstellen des Getriebegehäuses als Gussteil.

Bei einer weiteren Ausführungsform sind die Anbauflächen, welche eine Bohrung aufweisen, senkrecht oder parallel zueinander und im eingebauten Zustand des Getriebegehäuses bzw. eines korrespondierenden Getriebes sind die Anbauflächen durch entsprechende Flächen angebauter Vorrichtungen und/oder durch ein passendes Abdeckelement abgedeckt. Von Vorteil ist dabei, dass sich das Getriebegehäuse gut in eine Anlage einfügen lässt so dass Flüssigkeiten an der Oberfläche des Getriebegehäuses gut ablaufen und Verunreinigungen leicht entfernbar sind, ohne dass Abflusskanäle vorgesehen werden müssen.

Bei einer weiteren Ausführungsform ist eine vom Getriebegehäuse abgewandte Oberfläche der Abdeckelemente den Abschnitten beziehungsweise den Abschnitten und Ebenen entsprechend ausgeformt. Von Vorteil ist dabei, dass das Getriebegehäuse gute Reinigungseigenschaften aufweist und trotzdem die Flexibilität eines normalen Getriebegehäuses bietet.

Bei einer weiteren Ausführungsform umfassen die Bereiche und somit die Oberfläche eine Zwischenoberfläche, welche in einer ersten Richtung konvex und in einer zweiten Richtung konkav oder konvex gekrümmt ist, insbesondere ist die erste Richtung annähernd senkrecht bis senkrecht zur zweiten Richtung. Von Vorteil ist dabei, dass Flüssigkeiten an der Oberfläche des Getriebegehäuses gut ablaufen und Verunreinigungen leicht entfernbar sind.

Bei einer weiteren Ausführungsform weist das Getriebegehäuse eine Abtriebsseite auf, in welcher eine erste und zweite durchgehende Ausnehmung eingearbeitet sind, wobei die erste und zweite Ausnehmung eine gemeinsame Stirnfläche bilden, welche eine erste Anbaufläche darstellt. Von Vorteil ist dabei, dass die gemeinsame Stirnfläche gut abdeckbar ist und gleichzeitig die zweite Ausnehmung durch eine dafür vorgesehene Abdeckung abdeckbar ist, ohne das kritische Vertiefungen und/oder Hohlräume entstehen.

Bei einer weiteren Ausführungsform ist das Getriebegehäuse aus Edelstahl insbesondere aus dem Edelstahl GX5CrNI19-10 hergestellt. Von Vorteil ist dabei, dass das Getriebegehäuse leicht zu reinigen ist und die Oberfläche auch aggressiveren Reinigungsmitteln standhält.

Bei einer weiteren Ausführungsform ist die Oberfläche mit einer nicht korrosiven und/oder antihaftenden Beschichtung insbesondere einem Polymer beschichtet. Von Vorteil ist dabei, dass das Getriebegehäuse leicht zu reinigen ist und die Oberfläche auch aggressiveren Reinigungsmitteln standhält.

Bei einer weiteren Ausführungsform weist die Oberfläche einen arithmetischen Mittenrauwert Ra zwischen ungefähr 0.8 Mikrometern und ungefähr 6.0 Mikrometern, vorzugsweise zwischen ungefähr 2.5 Mikrometern und ungefähr 3.5 Mikrometern, auf. Von Vorteil ist dabei, dass Verunreinigungen und Bakterien eine kleinere Kontaktfläche zur Oberfläche des Getriebegehäuses aufweisen ohne in Vertiefungen an der Oberfläche zu versinken. Somit ergibt sich eine geringere Adhäsionskraft als bei einer glatten Oberfläche und das Getriebegehäuse ist leichter zu reinigen.

Bei einer weiteren Ausführungsform weist das Getriebegehäuse an einer Innenfläche eine Verstärkung auf. Von Vorteil ist dabei, dass die Oberfläche des Getriebegehäuses keine Konturen oder Vorsprünge aufweist, an welchen Verunreinigungen besser haften bleiben oder nur schlecht wegspülbar sind.

Wichtige Merkmale eines Verfahrens zur Herstellung eines Getriebegehäuses sind, dass das Getriebegehäuse aus Edelstahl gegossen wird und anschließend das Getriebegehäuse geschliffen und/oder elektropoliert wird. Von Vorteil ist dabei, dass ein übliches Herstellungsverfahren verwendbar ist, welches mit einem erfinderischen Verfahrensschritt veredelt wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 10: Getriebegehäuse
- 12: erster Bereich
- 13: kantenartiger Bereich
- 14: erste Anbaufläche
- 15: erste Ebene
- 16: zweite Ebene
- 17: Zylindermantelfläche
- 18: Zylindermantelflächenbereich
- 19: Zwischenoberfläche
- 20: Deckel
- 24: Zwischenscheibe
- 26: Drehmomentstütze
- 30: erste Abtriebsseite
- 31: zweite Abtriebsseite
- 32: erste Ausnehmung
- 33: erstes Bohrbild
- 34: zweite Ausnehmung
- 35: dritte Ebene
- 38: aufliegende Anbaufläche
- 40: Montageseite
- 42: zweite Anbaufläche
- 44: Satteldachfläche
- 46: Montageöffnung
- 50: Eintriebsseite
- 52: dritte Anbaufläche
- 53: zweites Bohrbild
- 54: äußere Kante
- 56: kreisförmige Öffnung
- 60: Innenfläche
- 62: längliche Verdickung
- 64: ringförmige Verdickung
- 70: erste Durchgangsbohrung
- 71: Anbaufläche für Entlüftung
- 72: zweite Durchgangsbohrung
- 73: Deckelbohrung
- 74: besondere Anbaufläche des Deckels
- 76: Montagelöcher
- 90: größeres annähernd ringförmiges Element
- 92: kleineres annähernd ringförmiges Element
- 94, 96: zwei Schenkel
- 98: weiteres Bohrbild

Die Erfindung wird nun anhand von Ausführungsbeispielen mit Bezugnahme auf die Zeichnung näher erläutert. Es zeigen rein schematisch:
Fig. 1 eine perspektivische Draufsicht auf ein erfindungsgemäßes Getriebegehäuse;
Fig. 2 eine Unteransicht des in Figur 1 gezeigten Getriebegehäuses;
Flg. 3 eine Rückansicht des in Figur 1 gezeigten Getriebegehäuses;
Fig. 4 einen Schnitt durch das in Figur 1 gezeigte Getriebegehäuse;
Fig. 5 eine perspektivische Draufsicht eines Deckels für das in Figur 1 gezeigte Getriebegehäuse;
Fig. 6 eine perspektivische Draufsicht einer Zwischenscheibe für das in Figur 1 gezeigte Getriebegehäuse; und
Fig. 7 eine perspektivische Draufsicht einer Drehmomentstütze für das in Figur 1 gezeigte Getriebegehäuse.

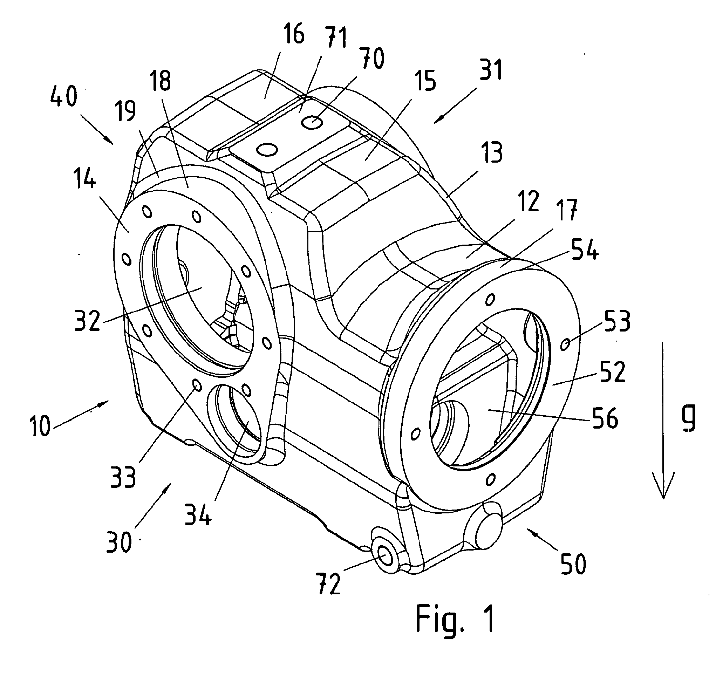

Figur 1 zeigt ein erfindungsgemäßes Getriebegehäuse 10 für ein Kegelradgetriebe in Draufsicht. Durch die erwünschte Funktionalität eines Kegelradgetriebes sind einige konstruktive Merkmale für das Getriebegehäuse 10 vorgegeben. Insbesondere weist das Getriebegehäuse 10 eine Eintriebsseite 50 und eine Abtriebsseite auf. Bei besonders bevorzugten Ausführungsformen weist das Getriebegehäuse 10 eine erste Abtriebsseite 30 und eine der ersten Abtriebsseite 30 gegenüberliegenden zweite Abtriebsseite 31 auf. Die erste und zweite Abtriebsseite 30, 31 liegen je in einer parallel zueinander verlaufenden Abtriebsebene, welche senkrecht zu einer Eintriebsebene stehen, in welcher die Eintriebsseite 50 liegt.

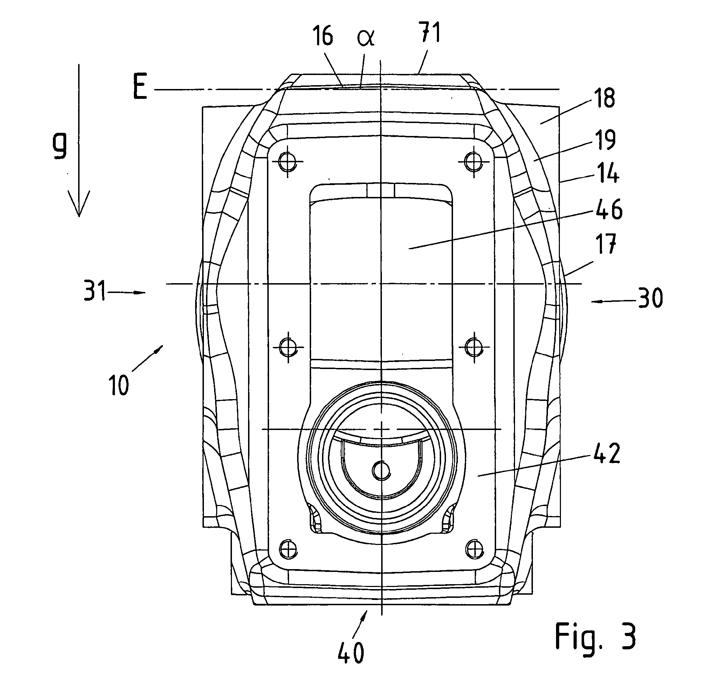

Das Getriebegehäuse 10 weist eine Oberfläche auf, welche aus Abschnitten, Anbauflächen und Ebenen besteht. Mit "bestehen aus" ist hier gemeint, dass die Oberfläche nur Abschnitte, Anbauflächen und Ebenen aufweist. Die Ebenen sind im Rahmen der für die Fertigung als Gussteil bzw. mit spanenden Techniken üblichen Genauigkeit ungekrümmte, d.h. plane Ebenen. Die Ebenen sind derart angeordnet, dass, bei der Verwendung des Getriebegehäuses 10 in einer Anlage, die Ebenen bei jeder vorkommenden Einbaulage des Getriebegehäuses 10 zu einer gedachten Ebene E, deren Normalenvektor kollinear zur Schwerkraft g ist, einen Winkel α einschließen, dessen Betrag größer als oder gleich drei Grad ist. Beispielhaft ist in Figur 3 der Winkel α zwischen einer zweiten Ebene 16 und der gedachten Ebene E eingezeichnet.

In der ersten Abtriebsseite 30 sind eine erste Ausnehmung 32 und eine zweite Ausnehmung 34 eingebracht. Die erste und zweite Ausnehmung 32, 34 sind kreisförmig mit unterschiedlichen Durchmessern ausgeformt. Die erste Ausnehmung 32 weist einen größeren Durchmesser auf und dient zur Montage einer Abtriebswelle. Bei einer als Vollwelle ausgeführten Abtriebswelle ragt die Vollwelle aus der ersten Ausnehmung 32 heraus. Bei der Montage des fertigen Getriebes mit einer Abtriebswelle als Hohlwelle wird eine Welle einer anzutreibenden Vorrichtung in die Hohlwelle und somit in die erste Ausnehmung 32 eingeführt.

Die zweite Ausnehmung 34 dient zur Montage einer Zwischenwelle an der zum Beispiel ein Tellerrad einer Kegelradstufe montierbar ist. Eine erste Anbaufläche 14 bildet eine gemeinsame Stirnfläche der ersten und zweiten Ausnehmung 32, 34.

In der ersten Abtriebsseite sind um die erste Ausnehmung 32 herum in der ersten Anbaufläche 14 Bohrungen eingebracht, welche ein erstes Bohrbild 33 ergeben. Dieses erste Bohrbild 33 ist zum Beispiel dazu verwendbar, das Getriebegehäuse in verschiedenen diskreten Einbaulagen an einer anzutreibenden Vorrichtung zu befestigen.

Die Eintriebsseite 50 weist eine kreisförmige Öffnung 56 mit einer dritten Anbaufläche 52 als Stirnfläche auf. Um die kreisförmige Öffnung 56 sind in der dritten Anbaufläche 52 Bohrungen angeordnet, welche ein zweites Bohrbild 53 ergeben. Das zweite Bohrbild 53 dient zum Befestigen eines Motors oder eines Motoradapters an dem Getriebegehäuse 10.

Zur Erhöhung der Flexibilität des Getriebegehäuses ist die zweite Abtriebsseite analog zur ersten Abtriebsseite ausgeführt.

Die Abschnitte sind durch je eine erste und zweite Richtung aufgespannt. Die Abschnitte sind mindestens entlang je einer ersten Richtung konvex gekrümmt das heißt eine erste Oberflächenkurve ist konvex gekrümmt. Entlang einer zweiten Richtung sind die Abschnitte vorteilhafterweise auch konvex gekrümmt, das heißt eine zweite Oberflächenkurve ist auch konvex. In bestimmten Abschnitten sind aber konkave Krümmungen entlang einer ersten oder zweiten Richtung nicht zu vermeiden.

Wichtig Ist, dass es In jedem Abschnitt zwischen zwei Anbauflächen immer eine konvex gekrümmte Oberflächenkurve gibt. Das bedeutet nicht, dass eine Verbindungslinie zwischen zwei Anbauflächen konvex gekrümmt sein muss.

Für jeden Punkt auf jedem Abschnitt der Oberfläche lässt sich eine Normalenebene durch den Punkt finden welche als Schnittgebilde mit dem zugehörigen Abschnitt eine nur konvex gekrümmte Oberflächenkurve bildet. "nur konvex gekrümmt" ist gleichbedeuten mit "durchgehend konvex gekrümmt". Die Normalenebene schneidet den zughörigen Abschnitt in dem Punkt senkrecht.

Jeder Abschnitt grenzt an mindestens zwei Anbauflächen oder Ebenen an. Das Bedeutet, dass die Abschnitte jeweils entweder mindestens an zwei Anbauflächen oder an zwei Ebenen oder an einer Anbaufläche und einer Ebene angrenzen. Die Abschnitte können aber auch an mehrere Anbauflächen oder Ebenen angrenzen.

Jeder Abschnitt ist entlang zumindest einer Oberflächenkurve konvex gekrümmt, wobei die Oberflächenkurve das Schnittgebilde einer zu einem Punkt des Abschnitts gehörigen gedachten Normalenebene mit dem jeweiligen Abschnitt ist. Die Normalenebene schneidet die Oberfläche in dem Punkt senkrecht. Die Normalenebene lässt sich in jedem Abschnitt so drehen, dass deren Schnittgebilde mit dem Abschnitt der Oberfläche eine konvexe Oberflächenkurve erzeugt. So entsteht über den kompletten Abschnitt eine Oberflächenkurve, welche nur konvex gekrümmt ist.

Die Oberfläche des Getriebegehäuses lässt sich so in Abschnitte, Ebenen und Anbauflächen unterteilen, dass die oben beschriebenen Bedingungen für die Abschnitte, Anbauflächen und Ebenen erfüllt sind. Dies führt zu einem bauchigen Erscheinungsbild des Getriebegehäuses, da jeder Abschnitt entlang zumindest eiern Richtung nach außen gewölbt ist.

Bei dem in Figur 1 gezeigten Ausführungsbeispiel eines erfindungsgemäßen Getriebegehäuses sind die Abschnitte in je einer ersten Richtung konvex gekrümmt. Zur besseren Identifizierung sind die Abschnitte noch in Bereich unterteilt. Ein erster Bereich 12 ist in einer ersten Richtung konvex gekrümmt und in einer zweiten zur ersten Richtung senkrechten Richtung im Rahmen der Fertigungsgenauigkeit plan. Andere Bereiche, wie ein kantenartiger Bereich 13, sind in ihrer ersten Richtung konvex geformt und in ihrer zweiten Richtung ebenso konvex geformt. Der erste Bereich 12, der kantenartige Bereich 13 sowie die Zylindermantelfläche 17 liegen in einem Abschnitt zwischen der dritten Anbaufläche und der ersten Ebene 15.

Ein weiterer Bereich, welcher als Zwischenoberfläche 19 zwischen einem Zylindermantelflächenbereich 18 und einem anderen Bereich ausgebildet ist, ist in einer ersten Richtung konvex gekrümmt und in einer zweiten Richtung konkav gekrümmt und bildet somit eine Sattelfläche. Die Zwischenoberfläche 19 läuft um die erste und zweite Ausnehmung 32, 34 um. Der Zylindermantelflächenbereich 18 und die Zwischenoberfläche 19 liegen in einem weiteren Abschnitt der Oberfläche zwischen der ersten Anbaufläche 14 und der Anbaufläche für Entlüftung 71.

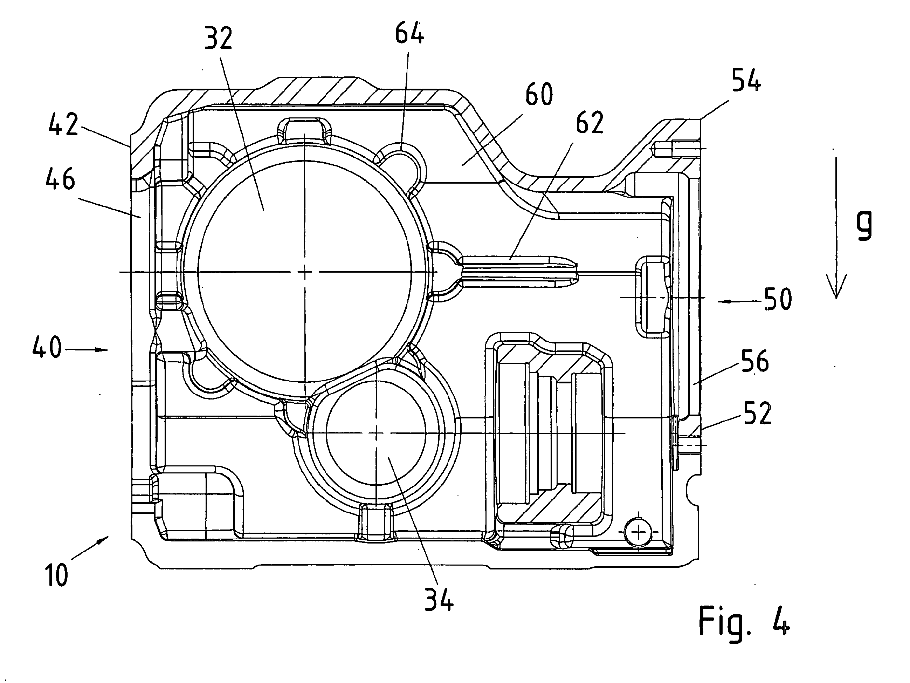

Da jeder Abschnitt der Oberfläche mindestens in einer Richtung konvex geformt ist, kann auf die Ausbildung von Abflusskanälen verzichtet werden. Dies vereinfacht die Gussform und den ganzen Herstellungsprozess des Getriebegehäuses 10. Es werden auch störende Vorsprünge vermieden. Die Konstruktiv nötigen Verstärkungen sind auf einer Innenfläche 60 des Getriebegehäuses 10 verlagert. Figur 4 zeigt beispielhaft eine längliche Verdickung 62 und eine halbkreisförmige Verdickung 64 als Verstärkung an der Innenfläche 60 des Getriebegehäuses 10. Dies vereinfacht auch eine Nachbehandlung der Oberfläche des Getriebegehäuses 10.

Die Anbauflächen sind ungekrümmt und im eingebauten Zustand des Getriebegehäuses 10 durch entsprechende Abdeckelemente und/oder angebaute Vorrichtungen abgedeckt. Die zwischen Abdeckelement bzw. angebauter Vorrichtung und dem Getriebegehäuse 10 nötigen Abdichtelemente sind so angeordnet, dass keine Spalten oder abgedeckten Hohlräume entstehen. Nur Außenkanten der Anbauflächen sind Kanten im eigentlichen Sinne, d.h. Kanten, welche im Rahmen der fertigungstechnischen Möglichkeiten durch zwei direkt aneinander stoßende Anstoßflächen gebildet werden. Die Anstoßflächen der Kanten sind meist von einem Abschnitt der Oberfläche und einer Anbaufläche gebildet. Übergänge zwischen zwei Abschnitten sind bei dem in Figur 1 gezeigten Ausführungsbeispiel als Abschnitte ausgeführt.

Die erste Anbaufläche 14 bildet eine gemeinsame Stirnfläche für die erste Ausnehmung 32 und die zweite Ausnehmung 34 der ersten Abtriebsseite. Die zweite Abtriebsseite 31 ist entsprechend ausgeführt.

Versuche haben gezeigt, dass für die konkaven und konvexen Krümmungen ein Krümmungsradius von ca. 6mm vorteilhaft ist und ein Krümmungsradius von ca. 3mm gerade noch geeignet ist, Flüssigkeiten an der Oberfläche gut abfließen zu lasse und Verschmutzungen leicht entfernen zu können. Daher weist bei einer besonders bevorzugten Ausführungsform die Oberfläche, bis auf die Außenkanten der Anbauflächen, entlang jeder beliebigen Richtung nur Krümmungsradien auf, welche größer als 3mm sind, besonders vorteilhafterweise sind die Krümmungsradien größer als 6mm. Insbesondere ist ein kantenartiger Bereich 13 so abgerundet, dass er die bevorzugten Krümmungsradien aufweist.

Der Krümmungsradius ist durch den Radius eines Kreises definiert, der sich an die Oberfläche anschmiegt. Unter Krümmung versteht man den Kehrwert des Krümmungsradius.

Ebenso haben Versuche gezeigt, dass eine im Rahmen der Fertigungsgenauigkeit ebene Ebene zu einer gedachten Ebene, deren Einheitsvektor kollinear zur Schwerkraft ist, einen Winkel von größer als 3 Grad einschließen sollte.

In der in Figur 1 gezeigten Ausführungsform weist das Getriebegehäuse 10 eine erste Durchgangsbohrung 70 und eine zweite Durchgangsbohrung 72 auf. Diese sind im zusammengebauten Zustand des Getriebes durch eine Verschlussschraube oder ein Entlüftungsventil verschlossen. Je nach Einbaulage des Getriebes kann das Entlüftungsventil in die erste Durchgangsbohrung 70 oder die zweite Durchgangsbohrung 72 eingeschraubt werden. Die erste und zweite Durchgangsbohrung 70, 72 sind von einer entsprechenden Anbaufläche umgeben, wie zum Beispiel einer Anbaufläche für die Entlüftung 71.

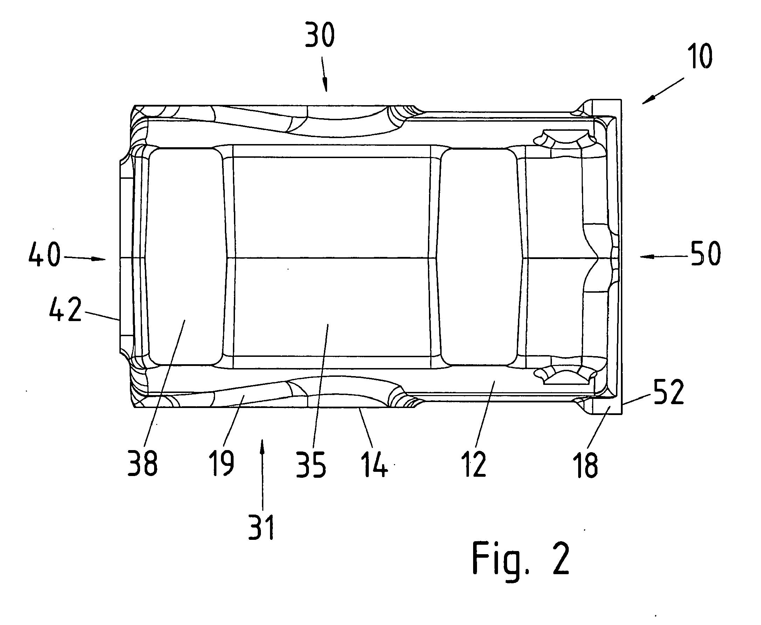

Figur 2 zeigt als Unteransicht eine Fußseite des in Figur 1 gezeigten Getriebegehäuses 10. Die Fußseite weist eine Anbaufläche als Fußfläche 38 und eine dritte Ebene 35 auf. Bei entsprechender Einbaulage dient die Fußfläche 38 als Auflagefläche für das Getriebegehäuse 10. Bei einer nicht gezeigten Ausführungsform des Getriebegehäuses 10 für ein Aufsteckgetriebe ist diese Auflagefläche nicht vorhanden und die dritte Ebene 35 erstreckt sich fast über die gesamte Länge der Fußseite.

Eine Montageseite 40 des erfindungsgemäßen Getriebegehäuses 10 ist in Figur 3 in der Rückansicht des Getriebegehäuses 10 gezeigt.

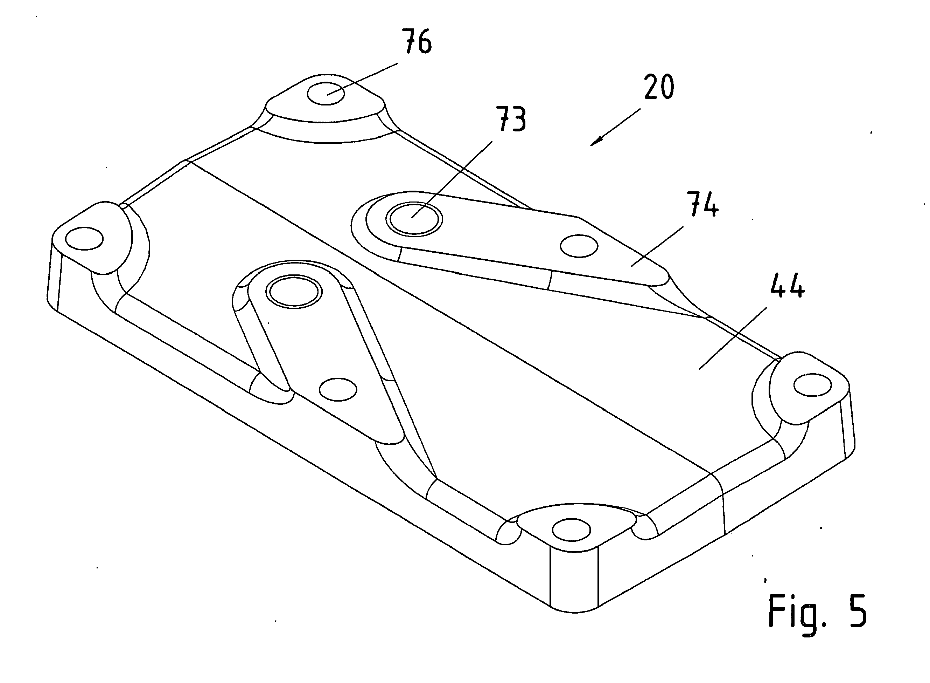

Die Montageöffnung 46 dient zum Montieren bzw. einbringen der im Getriebegehäuse 10 angeordneten Wellen und Zahnräder. Die Montageöffnung 46 ist von einer zweiten Anbaufläche 42 umrahmt, welche Bohrungen mit Innengewinde aufweist. An die zweite Anbaufläche 42 ist nach der Montage des Getriebes im Getriebegehäuse 10 ein in Figur 5 gezeigter Deckel 20 angeschraubt.

Der Deckel 20 ist im Wesentlichen rechteckig ausgeformt und verschließt die Montageöffnung 46. Die Oberfläche des Deckels selbst weist entsprechend dem Getriebegehäuse 10 gestaltete Abschnitte, Ebenen und Anbaufläche auf. Im Deckel sind Montagelöcher 76 ausgeführt. Durch diese Montagelöcher 76 sind Schrauben geführt, mit welchen der Deckel 20 am Getriebegehäuse 10 befestigt wird. Die Schrauben sind so ausgeführt, dass sie die in Figur 5 gezeigten Konterflächen für die Schrauben abdecken. Diese Konterflächen bilden also auch Anbauflächen im Sinne der Erfindung.

Eine Grundfläche der Oberfläche des Deckels 20 bildet eine Satteldachfläche 44, dessen Giebel die Oberfläche entlang der langen Seite des Rechtecks in zwei Hälften teilt. Die satteldachflächen bilden zu einer gedachten Grundebene des Deckels 20 einen Winkel von mindestens drei Grad.

Anbauflächen des Deckels 20 dienen als Auflage entsprechender Befestigungsschrauben zum anschraubend des Deckels 20 an die zweite Anbaufläche 42. Die Anbauflächen sind durch passend geformte Abdeckelemente wie Schraubenköpfe oder Unterlegelemente abdeckbar, so dass die letztendliche sichtbare Oberfläche im montierten Zustand nur konvexe oder zumindest in einer Richtung konvexe Abschnitte aufweist.

Eine besondere Anbaufläche 74 des Deckels 20 ragt in die Satteldachfläche hinein und weist eine Deckelbohrung 73 auf in welche ein Entlüftungsventil oder eine Verschlussschraube einschraubbar ist.

Figur 4 zeigt das in Figur 1 gezeigte Getriebegehäuse 10 im Schnitt. Verstärkungen des Getriebegehäuses 10, welche beim Stand der Technik üblicherweise an der Gehäuseoberfläche ausgeformt sind, sind beim erfindungsgemäßen Getriebegehäuse 10 ins Innere des Getriebegehäuses 10 verlagert. An der innenseite des Getriebegehäuses 10 sind zum Beispiel halbkreisförmige Verdickungen 64 oder längliche Verdickungen 62 als Verstärkungen ausgeformt. Trotzdem lassen sich die üblichen Verzahnungsteile und Wellen zum Beispiel für ein Kegelradgetriebe mit zwei Stirnradstufen und einer Kegelradstufe in das erfindungsgemäße Getriebegehäuse einbauen.

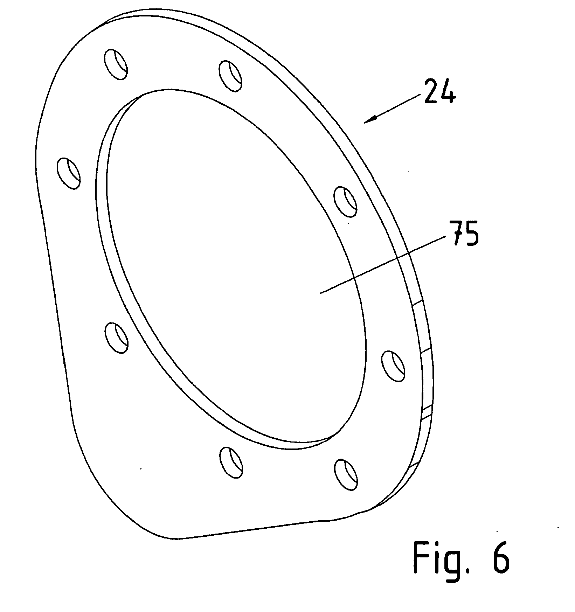

Eine in Figur 6 gezeigte Zwischenscheibe weist eine im wesentlichen eiförmige Grundfläche auf, welche im Wesentlichen deckungsgleich mit der ersten Anbaufläche 14 ist. Ein in der Zwischenscheibe ausgeführtes Bohrbild entspricht dem ersten Bohrbild 33 um die erste Ausnehmung 32 in der ersten Anbaufläche 14. Die Zwischenscheibe 24 weist eine mit der ersten Ausnehmung 32 korrespondierende Ausnehmung 75 auf. Im an die erste Anbaufläche 14 angebauten Zustand der Zwischenscheibe 24 verdeckt die Zwischenscheibe die zweite Ausnehmung 34. Somit ist die zweite Ausnehmung sicher verschlossen, ohne das in der Gesamtoberfläche des montierten Getriebes eine von außen zugängliche Vertiefung oder ein von außen zugänglicher Hohlraum entsteht. Gleichzeitig ist die Zwischenscheibe 24 so ausführbar, dass über der zweiten Ausnehmung 34 eine konvexe Oberfläche vorhanden ist.

Die zweite Abtriebsseite 31 ist analog abdeckbar oder durch ein weiteres Abdeckelement, welches beide Ausnehmungen der zweiten Abtriebsseite ohne verbleibende Öffnung abdeckt.

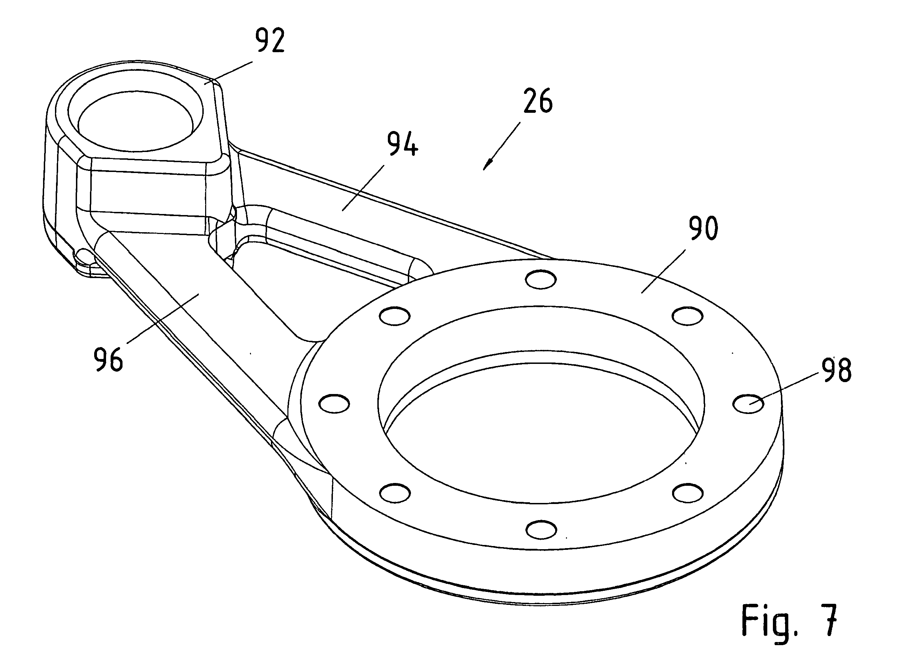

Figur 7 zeigt eine Drehmomentstütze 26, deren Oberfläche entsprechend der Oberfläche des Getriebegehäuses 10 gestaltet ist. Die Drehmomentstütze 26 weist ein größeres und ein kleineres annähernd ringförmiges Element 90, 92 auf, welche über zwei Schenkel 94, 96 miteinander verbunden sind. Die zwei Schenkel 94, 96 sind, in einer Ebene liegend, an den Umfängen der annähernd ringförmigen Elemente 90, 92 angeformt und stehen in einem Winkel zueinander, so dass sich der Winkel zum größeren annähernd ringförmigen Element 90 hin öffnet. Das größere annähernd ringförmige Element 90 weist abgeplattete Stirnflächen auf in welche ein weiteres Bohrbild 98 eingebracht ist, welches mit dem ersten Bohrbild 33 korrespondiert. Somit lässt sich die Drehmomentstütze 26 unter Zwischenanordnung der Zwischenscheibe 24 am Getriebegehäuse 10 in verschiedenen, durch das weitere Bohrbild 98 vorgegebenen, Lagen anschrauben. Das kleinere annähernd ringförmige Element 92 dient zur Befestigung der Drehmomentstütze 26 an einer drehfesten Vorrichtung.

An die Anbauflächen Insbesondere die erste Anbaufläche 14 bzw. die Zwischenscheibe 24 bzw. die Drehmomentstütze 26 und die dritte Anbaufläche 52 lassen sich auch entsprechend der Oberfläche des Getriebegehäuses 10 ausgeformte Flansche befestigen. Diese dienen als Adapter zur Verbindung mit entsprechenden Antriebsmitteln, wie elektrischen Motoren, oder anzutreibenden Vorrichtungen, oder Kupplungen, Bremsen etc..

Vorteilhafterweise ist das Getriebegehäuse 10, die Zwischenscheibe 24 und die Drehmomentstütze 26 aus Edelstahl insbesondere aus dem Edelstahl GX5CrNi19-10 gefertigt. Durch die hohe Festigkeit und die Verstärkungen an der Innenseite des Getriebegehäuses kann dann bei geeigneten Betriebsbedingungen auf eine Entlüftung verzichtet werden. Dann können die Durchgangsbohrungen 70, 72 und die entsprechenden Anbauflächen 71 entfallen. Dies spart auch die passenden Abdeckelement ein. Ebenso ist die Geometrie der Oberfläche mit weniger konkaven Krümmungen ausführbar. Zum Beispiel ist dann die zweite Ebene 16 in Richtung der Eintriebsseite 50 fortgeführt und bildet mit der ersten Ebene 15 eine zusammenhängende Ebene.

Bekannte hier nicht gezeigte Getriebegehäuse weisen an bestimmten Anbauflächen insbesondere in der Eintriebsseite 50 sogenannte Abtriebstaschen auf. Zum Entfernen angebauter Vorrichtungen wird ein entsprechendes Werkzeug in die Abtriebstasche eingebracht, um die angebaute Vorrichtung wegzuhebein. Die Abtriebstaschen sind üblicherweise als von der Oberfläche her zugängliche, insbesondere keilförmige Ausnehmungen zum Beispiel in der dritten Anbaufläche 52 der Eintriebsseite 52 ausgebildet. Die Abtriebstaschen unterbrechen eine Kante 54 der dritten Anbaufläche der Eintriebsseite 50 bzw. verformen diese Kante 54. Durch die Abtriebstaschen sind bei bekannten Getrieben von Außen zugängliche Hohlräume gebildet. Diese hohlräume sind in einer bevorzugten Ausführungsform der Erfindung weggelassen und eine äußere Kante 54 der dritten Anbaufläche 52 formt einen ununterbrochenen Kreis. Die dritte Anbaufläche 52 ist als Stirnfläche der Eintriebsseite zum Anflanschen eines Motors ausgebildet.

In einer weiteren, nicht gezeigten Ausführungsform besteht die Oberfläche nur aus Abschnitten und Anbauflächen. Die Abschnitte und Anbauflächen sind wie oben beschrieben ausgeführt.

Das Getriebegehäuse 10 wird vorteilhafterweise als Gussteil gefertigt. Die Oberfläche des Getriebegehäuses 10 wird anschließend geschliffen und/oder elektropoliert, so dass die Oberfläche einen arithmetischen Mittenrauwert Ra zwischen ungefähr 0.8µm und ungefähr 6.0µm, vorzugsweise zwischen ungefähr 2.5µm und ungefähr 3.5µm, aufweist. Dies hat den Vorteil gegenüber glatten Oberflächen, dass die Schmutzpartikel oder andere Verunreinigungen wie zum Beispiel Bakterien nicht vollständig mit der Oberfläche in Kontakt stehen. Dadurch ist eine Adhäsionskraft zwischen Bakterien bzw. Schmutz und der Oberfläche verringert und die Verunreinigungen sind leichter entfernbar.

In einem alternativen Verfahren kann die Oberfläche zusätzlich mit einer Antikorrosionsschicht und/oder Antihaftschicht beschichtet werden. Bevorzugt wird dabei ein Polymer, wie zum Beispiel Polytetrafluorethylen verwendet.

Die erfinderische Idee des Getriebegehäuses für ein Kegelradgetriebe ist nicht auf Kegelradgetriebe beschränkt und lässt sich auch auf Getriebegehäuse für andere Getriebe anwenden.

## Patentansprüche

1. Getriebegehäuse (10) für ein Kegeiradgetriebe mit einer Oberfläche,
weiche derart aus Abschnitten und Anbauflächen besteht, dass jeder Abschnitt an mindestens zwei Anbauflächen angrenzt und
jeder Abschnitt an jedem Punkt dieses Abschnittes entlang zumindest einer seiner Oberflächenkurven durchgehend konvex gekrümmt ist, wobei diese Oberflächenkurve das Schnittgebilde einer zu einem Punkt dieses Abschnitts gehörigen Normalenebene mit diesem Abschnitt ist.
**dadurch gekennzeichnet dass**, eine Eintriebsseite (50) eine dritte Anbauflächen (52) zum Anflanschen eines Motors aufweist, wobei die äußere Kante (54) der dritten Anbaufläche (52) einen durchgehenden ununterbrochenen Kreis formt,
wobei das Getriebegehäuse (10) an einer Innenfläche (60) als Verstärkung eine halbkreisförmige und eine längliche Verdickung (62, 64) aufweist.

2. Getriebegehäuse (10) nach Anspruch 1,
**dadurch gekennzeichnet, dass**
die Abschnitte einen Krümmungsradius von größer als 3 mm oder von größer als ca. 6 mm aufweisen.

3. Getriebegehäuse (10) nach einem der vorangegangenen Ansprüche,
**dadurch gekennzeichnet, dass**
die Anbauflächen, welche eine Bohrung aufweist, senkrecht oder parallel zueinander sind und im eingebauten Zustand des Getriebegehäuses (10) die Anbauflächen durch entsprechende Flächen angebauter Vorrichtungen oder durch ein passendes Abdeckelement abgedeckt sind.

4. Getriebegehäuse (10) nach Anspruch 3,
**dadurch gekennzeichnet, dass**
eine vom Getriebegehäuse (10) abgewandte Oberfläche von Abdeckelementen entsprechend den Abschnitten nach Anspruch 1 oder entsprechend den Abschnitten und Ebenen nach Anspruch 2 ausgeformt ist.

5. Getriebegehäuse (10) nach einem der vorangegangenen Ansprüche,
**dadurch gekennzeichnet, dass**
die Abschnitte und somit die Oberfläche eine Zwischenoberfläche (19) umfassen, welche in entlang einer ersten Oberflächenkurve konvex und entlang einer zweiten Oberflächenkurve durch denselben Punkt konkav oder konvex gekrümmt ist.

6. Getriebegehäuse (10) nach Anspruch 6,
**dadurch gekennzeichnet, dass**
die erste Normalenebene der ersten Oberflächenkurve annähernd senkrecht bis senkrecht zur Normalenebene der zweiten Oberflächenkurve ist.

7. Getriebegehäuse (10) nach einem der vorangegangenen Ansprüche,
**dadurch gekennzeichnet, dass**
das Getriebegehäuse (10) eine Abtriebsseite aufweist, in weicher eine erste und zweite durchgehende Ausnehmung eingearbeitet sind, wobei die erste und zweite Ausnehmung (32, 34) eine gemeinsame Stirnfläche bilden, welche eine erste Anbaufläche (14) darstellt.

8. Getriebegehäuse (10) nach einem der vorangegangenen Ansprüche,
**dadurch gekennzeichnet, dass**
das Getriebegehäuse (10) aus Edelstahl oder aus dem Edelstahl GX5CrNI19-10 hergestellt ist.

9. Getriebegehäuse (10) nach einem der vorangegangenen Ansprüche,
**dadurch gekennzeichnet, dass**
die Oberfläche mit einer nicht korrosiven und/oder antihaftenden Beschichtung beschichtet ist.

10. Getriebegehäuse (10) nach einem der vorangegangenen Ansprüche,
**dadurch gekennzeichnet, dass**
die Oberfläche einen arithmetischen Mittenrauwert Ra zwischen 0.8 µm und 6.0 µm aufweist.

11. Verwendung eines Getriebegehäuses (10) nach einem der vorangegangenen Ansprüche in einer Anlage, in welcher das Getriebegehäuse (10) in einer Einbaulage eingebaut ist,
**dadurch gekennzeichnet, dass**
das Getriebegehäuse derart in der Anlage eingebaut ist, dass
die Ebenen zu einer gedachten Ebene (E), deren Normalenvektor kollinear zur Schwerkraftrichtung ist, einen Winkel (α) einschließen, dessen Betrag größer als oder gleich drei Grad ist.

12. Verfahren zur Herstellung eines Getriebegehäuses (10) nach einem der vorangegangenen Ansprüche,
**dadurch gekennzeichnet, dass**
das Getriebegehäuse (10) aus Edelstahl gegossen wird und anschließend die Oberfläche des Getriebegehäuses (10) geschliffen und/oder elektropoliert wird.

## Claims

1. A transmission casing (10) for a bevel gear with a surface
which consists of sections and attachment faces such that each section adjoins at least two attachment faces, and
each section at each point of this section is continuously convexly curved along at least one of its surface curves, this surface curve being the intersection of a normal plane associated with a point of this section with the section,
**characterised in that**
an input side (50) has a third attachment face (52) for flange-connecting a motor, the outer edge (54) of the third attachment face (52) forming a continuous, uninterrupted circle,
the transmission casing (10) having on an inner face (60) as reinforcement a semicircular and an elongate thickened section (62, 64).

2. A transmission casing (10) according to Claim 1,
**characterised in that**
the sections have a radius of curvature of greater than 3 mm, or of greater than approx. 6 mm.

3. A transmission casing (10) according to one of the preceding claims,
**characterised in that**
the attachment faces, which has [sic] a bore, are perpendicular or parallel to one another and in the installed state of the transmission casing (10) the attachment faces are covered by corresponding faces of attached devices or by a suitable covering element.

4. A transmission casing (10) according to Claim 3,
**characterised in that**
a surface of covering elements which is remote from the transmission casing (10) is formed corresponding to the sections according to Claim 1 or corresponding to the sections and planes according to Claim 2.

5. A transmission casing (10) according to one of the preceding claims,
**characterised in that**
the sections and hence the surface comprise an intermediate surface (19) which is convexly curved in [sic] along a first surface curve and is concavely or convexly curved along a second surface curve through the same point.

6. A transmission casing (10) according to Claim 5,
**characterised in that**
the first normal plane of the first surface curve is approximately perpendicular to perpendicular to the normal plane of the second surface curve.

7. A transmission casing (10) according to one of the preceding claims,
**characterised in that**
the transmission casing (10) has an output side, in which a first and second through-cutout are incorporated, the first and second cutout (32, 34) forming a common end face, which represents a first attachment face (14).

8. A transmission casing (10) according to one of the preceding claims,
**characterised in that**
the transmission casing (10) is produced from high-grade steel or from the high-grade steel GX5CrNi19-10.

9. A transmission casing (10) according to one of the preceding claims,
**characterised in that**
the surface is coated with a non-corrosive and/or anti-adhesion coating.

10. A transmission casing (10) according to one of the preceding claims,
**characterised in that**
the surface has an arithmetic average roughness Ra of between 0.8 µm and 6.0 µm.

11. Use of a transmission casing (10) according to one of the preceding claims in an installation in which the transmission casing (10) is installed in an installation position,
**characterised in that**
the transmission casing is installed in the installation such that
the planes enclose relative to an imaginary plane (E), the normal vector of which is collinear to the direction of gravity, an angle (α), the amount of which is greater than or equal to three degrees.

12. A method for producing a transmission casing (10) according to one of the preceding claims,
**characterised in that**
the transmission casing (10) is cast from high-grade steel and then the surface of the transmission casing (10) is ground and/or electropolished.

## Revendications

1. Carter d'engrenage (10) pour un engrenage conique, avec une surface qui est constituée de segments et de faces de montage de telle sorte que chaque segment est limitrophe d'au moins deux faces de montage,
et que chaque segment est, en chaque point de ce segment, à courbure continûment convexe le long d'au moins une de ses courbes de surface, sachant que cette courbe de surface est le complexe d'intersection avec ce segment d'un plan normal associé à un point de ce segment,
**caractérisé en ce qu'**un côté d'entrée (50) présente une troisième face de montage (52) pour y brider un moteur, sachant que l'arête extérieure (54) de la troisième face de montage (52) forme un cercle continu, ininterrompu,
sachant que le carter d'engrenage (10) présente sur une face intérieure (60), comme renforcement, un épaississement semi-circulaire et un épaississement oblong (62, 64).

2. Carter d'engrenage (10) selon la revendication 1, **caractérisé en ce que** les segments présentent un rayon de courbure supérieur à 3 mm ou supérieur à environ 6 mm.

3. Carter d'engrenage (10) selon l'une des revendications précédentes, **caractérisé en ce que** les faces de montage, qui présentent un alésage, sont perpendiculaires ou parallèles entre elles et, dans l'état monté du carter d'engrenage (10), les faces de montage sont recouvertes par des faces correspondantes de dispositifs rapportés ou par un élément de recouvrement adapté.

4. Carter d'engrenage (10) selon la revendication 3, **caractérisé en ce qu'**une surface des éléments de recouvrement qui est opposée au carter d'engrenage (10) est façonnée conformément aux segments selon la revendication 1 ou conformément aux segments et plans selon la revendication 2.

5. Carter d'engrenage (10) selon l'une des revendications précédentes, **caractérisé en ce que** les segments et donc la surface comprennent une surface intermédiaire (19) qui est à courbure convexe le long d'une première courbe de surface et à courbure concave ou convexe le long d"une deuxième courbe de surface passant par le même point.

6. Carter d'engrenage (10) selon la revendication 5, **caractérisé en ce que** le premier plan normal de la première courbe de surface est approximativement perpendiculaire à perpendiculaire au plan normal de la deuxième courbe de surface.

7. Carter d'engrenage (10) selon l'une des revendications précédentes, **caractérisé en ce que** le carter d'engrenage (10) présente un côté de sortie dans lequel sont ménagés un premier et un deuxième évidements débouchants, sachant que le premier et le deuxième évidements (32, 34) forment une face frontale commune qui constitue une première face de montage (14).

8. Carter d'engrenage (10) selon l'une des revendications précédentes, **caractérisé en ce que** le carter d'engrenage (10) est fabriqué en acier inoxydable ou en acier inoxydable GX5CrNi19-10.

9. Carter d'engrenage (10) selon l'une des revendications précédentes, **caractérisé en ce que** la surface est revêtue d'un revêtement anticorrosion et/ou empêchant l'adhérence.

10. Carter d'engrenage (10) selon l'une des revendications précédentes, **caractérisé en ce que** la surface présente une moyenne arithmétique de rugosité Ra comprise entre 0,8 µm et 6,0 µm.

11. Utilisation d'un carter d'engrenage (10) selon l'une des revendications précédentes dans une installation dans laquelle le carter d'engrenage (10) est monté dans une position de montage, **caractérisée en ce que** le carter d'engrenage est monté dans l'installation de telle sorte que les plans forment un angle (α) supérieur ou égal à trois degrés avec un plan imaginaire (E) dont le vecteur normal est colinéaire à la direction de la gravité.

12. Procédé de fabrication d'un carter d'engrenage (10) selon l'une des revendications précédentes, **caractérisé en ce que** le carter d'engrenage (10) est coulé en acier inoxydable, à la suite de quoi la surface du carter d'engrenage (10) est meulée et/ou polie électrolytiquement.
